# EUROPEAN PATENT SPECIFICATION

(11) **EP 1 975 196 B1**
(45) Date of publication and mention of the grant of the patent: **25.11.2009**
(21) Application number: 08005679.9
(22) Date of filing: 26.03.2008
(51) Int. Cl.: C08K 3/00, B32B 1/08, F16L 11/04

(54) **Hydrin rubber composition and heat-resistant hose using the same as material**
Hydringummizusammensetzung und wärmefester Schlauch daraus
Composition de caoutchouc d'hydrine et tuyau thermorésistant l'utilisant en tant que matériau

(30) Priority: 27.03.2007 JP 2007082195; 27.03.2007 JP 2007082196; 28.09.2007 JP 2007253144; 28.09.2007 JP 2007253145
(43) Date of publication of application: 01.10.2008
(73) Proprietor: TOKAI RUBBER INDUSTRIES, LTD., Komaki-shi, Aichi-ken, 485-8550 (JP)
(72) Inventor: Fukaya, Hideji, Nissin-shi Aichi-ken, 470-0131 (JP); Ikeda, Hidehito,, Aichi-ken 485-8550 (JP)
(74) Representative: Kuhnen & Wacker

(56) References cited:
- GB-A- 1 387 583
- US-A- 6 106 914
- US-A1- 2006 216 518
- DATABASE WPI Week 200744 Derwent Publications Ltd., London, GB; AN 2007-450238 XP002483238 -& JP 2007 070552 A (FUJIKURA RUBBER WORKS LTD) 22 March 2007 (2007-03-22)
- DATABASE WPI Week 200505 Derwent Publications Ltd., London, GB; AN 2005-042929 XP002483199 -& JP 2004 352952 A (DAISO CO LTD) 16 December 2004 (2004-12-16)

## Description

### BACKGROUND OF THE INVENTION

### 1. Field of the Invention

The present invention relates to a hydrin rubber composition used as a material for forming various types of hoses, for examples, for forming an outer surface of a heat-resistant hose such as an air >system hose or a fuel system hose for vehicles and further relates to a heat-resistant hose using the hydrin rubber composition as a material.

### 2. Description of the Related Art

Conventionally, a hydrin rubber composition of which main component is an epichlorohydrin polymer rubber (CO), an epichlorohydrin-ethylene oxide copolymer rubber (ECO), or an epichlorohydrin-ethylene oxide-allylglycidiyl ether copolymer rubber (GECO) is widely used as a material for forming a hose, such as an air system hose for vehicles, which is required to have heat resistance and the like. The aforementioned hydrin rubber composition usually (rather habitually) includes a nickel compound as an antioxidant, for example, nickel dibutyldithiocarbamate (NBC) (refer to Japanese Unexamined Patent Application Publication Nos. 5-230288 and 10-264314). However, alternative technology substituting for the use of the nickel compound has not really been developed so far. Furthermore, since there are concerns that the nickel compound can become a so-called environmental load material, hydrin rubber compositions not containing the nickel compounds have been investigated from the viewpoint of recent environmental issues.

However, a hose comprised of a hydrin rubber composition not containing the nickel compound is extremely poor in heat aging resistance, ozone resistance (in particular, dynamic ozone resistance), and the like and therefore is not satisfactory at all. In fact, the mechanism causing such disadvantages has not been clarified. When a hydrin rubber does not contain a nickel compound, the chlorine atom at the crosslinking point of the hydrin rubber is led to a state to be readily drawn. The production of hydrochloric acid in the system is hence increased to cause a shortage of an acid-accepting activity if the amount of a usually-used acid-accepting agent (such as magnesium oxide or calcium carbonate) is a normal level. Consequently, a reaction of hydrochloric acid with the main chain of a hydrin rubber, which is generated by the shortage of the acid-accepting activity, readily causes cleavage of, mainly, an ether moiety when the hydrin rubber layer is subjected to a heat aging resistance test or the like. As a result, the aforementioned phenomenon occurs.

Accordingly, the use of a nickel-free antioxidant that can achieve rubber characteristics equivalent to those in the use of the nickel compound has been investigated, but it is the actual situation that a hydrin rubber composition that is practically usable has not yet been obtained.

### SUMMARY OF THE INVENTION

The present invention has been made under the above-described circumstances, and it is an object of the present invention to provide a nickel-free hydrin rubber composition excellent in heat aging resistance, ozone resistance, storage stability, and the like. It is also an object of the present invention to provide a heat-resistant hose including the hydrin rubber composition as a material thereof, having extremely low transmittance of gas and fuel, containing no nickel, and being excellent in heat aging resistance, ozone resistance, and the like.

In order to achieve the above-mentioned object according to a first aspect of the present invention, a hydrin rubber composition includes the following components (A) to (E) as essential components:
(A) a hydrin rubber containing 10 to 40 mol% of ethylene oxide;
(B) an amine-based antioxidant;
(C) a phenol-based antioxidant;
(D) a metal dithiocarbamate (but excluding nickel salts); and
(E) a hydrotalcite compound.

According to a second aspect of the present invention, a heat-resistant hose has a layered structure including an inner layer and a hydrin-based rubber layer disposed on the outer surface of the inner layer. The inner layer is composed' of an acrylonitrile-butadiene rubber (NBR), a blended rubber composed of NBR and polyvinyl chloride (NBR-PVC), a fluorine rubber, or a fluorine resin. The hydrin-based rubber layer is composed of a rubber composition including the following components (A) to (F) as essential components:
(A) a hydrin rubber containing 10 to 40 mol% of ethylene oxide;
(B) an amine-based antioxidant;
(C) a phenol-based antioxidant;
(D) a metal dithiocarbamate (but excluding nickel salts) ;
(E) a hydrotalcite compound; and
(F) a 1,8-diazabicyclo[5.4.0]undecene-7 (DBU) salt.

The present inventors have conducted intensive studies on obtaining a hydrin rubber composition that contains no nickel and has rubber characteristics equivalent to those of conventional rubber compositions. They'have further continued studies on searching for nickel-free compounds that can serve, in place of conventional nickel compounds, as antioxidants having equivalent characteristics of heat aging resistance and the like to those of the conventional compounds. As a result, it has been found that a combined use of the amine-based antioxidant (component B), the phenol-based antioxidant (component C), and the metal dithiocarbamate (component D) does not cause softening degradation of the hydrin rubber and is significantly effective for improving the heat aging resistance, the ozone resistance, and the like. Further, it has been found that the desired object can be achieved by decreasing the amount of the ether moiety of the hydrin rubber main chain, which is a target of the attack by hydrochloric acid produced in the aforementioned system, by adjusting the amount of ethylene oxide of the hydrin rubber to 10 to 40 mol%, and blocking the activity of radicals (radicals generated by the attack of hydrochloric acid against the ether moiety of the hydrin rubber main chain) that cleave the hydrin rubber main chain, by using the' components (B) to (D) in combination as well as using the hydrotalcite compound that exhibits an excellent acid-accepting activity. The inventors have thus arrived at the present invention.

A consideration was also made of a hose having an inner layer composed of one of an NBR layer and an NBR-PVC layer which are excellent in fuel oil resistance, or an inner layer composed of one of a fluorine rubber layer and a fluorine resin layer which have extremely low transmittance (barrier property) of gas, fuel, or the like, and a hydrin rubber layer which is excellent in heat resistance ozone resistance and integrally layered on the outer surface of the inner layer. The present inventors have found that in this hose, the hydrin rubber layer-forming rubber composition containing, in combination, the amine-based antioxidant (component B), the phenol-based antioxidant (component C), and the metal dithiocarbamate (component D) does not cause softening degradation or the like of the hydrin rubber and is significantly effective for improving the heat aging resistance, the ozone resistance, and the like, as in the above. Further, it has been found, in like manner as in the foregoing, that the adhesion of the hydrin rubber layer to the inner layer (NBR, NBR-PVC, a fluorine rubber, or a fluorine resin) can be improved by such functions as obtained by decreasing the number of the ether moiety of the hydrin rubber main chain, which is a target of the attack by hydrochloric acid produced in the aforementioned system, by adjusting the amount of ethylene oxide of the hydrin rubber to 10 to 40 mol%; blocking the activity of radicals, which cleave the hydrin rubber main chain, by using the hydrotalcite compound showing an excellent acid-accepting activity; and adding the component D (metal dithiocarbamate) or the component F (DBU salt) to the hydrin rubber layer-forming rubber composition.

Therefore, the hydrin rubber composition according to the present invention includes a hydrin rubber containing 10 to 40 mol% of ethylene oxide (component A), an amine-based antioxidant (component B), a phenol-based antioxidant (component C), a nickel-free metal dithiocarbamate (component D), and a hydrotalcite compound (component E). Since a compound not containing nickel which is an environmental load material is used as the antioxidant, the hydrin rubber composition is advantageous for'environmental issues and can also exhibit excellent performance in heat aging resistance, ozone resistance, storage stability, processability, and so on.

In particular, the hydrin rubber composition can attain higher ozone resistance by the addition of a coagent having a double bond.

Moreover, the heat-resistant hose according to the present invention has a layered structure of an inner layer composed of NBR, NBR-PVC, a fluorine rubber, or a fluorine resin and a hydrin-based rubber layer disposed on the outer surface of the inner layer. The hydrin-based rubber layer is composed of a hydrin rubber composition including a hydrin rubber containing 10 to 40 mol% of ethylene oxide (component A), an amine-based antioxidant (component B), a phenol-based antioxidant (component C), a nickel-free metal dithiocarbamate (component D), a hydrotalcite compound (component E), and a DBU salt (component F). Since a compound not containing nickel which is an environmental load material is used as the antioxidant in the materials for forming the hydriri-based rubber layer, the heat-resistant hose is advantageous for environmental issues and can also exhibit excellent performance in heat aging resistance, ozone resistance, and the like. Further, the hydrotalcite compound exhibits an excellent acid-accepting activity even when nickel is absent. Consequently, such hose performance as having rubber physical properties equivalent to those in conventional nickel-containing hoses can be achieved. Furthermore, the heat-resistant hose according to the present invention has extremely low transmittance (barrier property) of gas, fuel, or the like, and the hydrin-based rubber layer has a high adhesion to the inner layer composed of NBR, NBR-PVC, a fluorine rubber, or a fluorine resin. Therefore, the heat-resistant hose according to the present invention can be advantageously used as a heat-resistant hose such as an air system hose or a fuel system hose for vehicles.

### BRIEF DESCRIPTION OF THE DRAWING

The sole figure of the drawing is a structural diagram illustrating an example of the heat-resistant hose according to the present invention.

### DESCRIPTION OF THE PREFERRED EMBODIMENTS

Embodiments of the present invention will now be described in detail.

As described above, the hydrin rubber composition according to the present invention is a rubber composition including the following components (A) to (E) as essential components:
(A) a hydrin rubber containing 10 to 40 mol% of ethylene oxide;
(B) an amine-based antioxidant;
(C) a phenol-based antioxidant;
(D) a metal dithiocarbamate (but excluding nickel salts); and
(E) a hydrotalcite compound.

The hydrin rubber used as the component (A) necessarily contains 10 to 40 mol% of ethylene oxide. This is because when the ethylene oxide content is less than 10 mol%, a decrease in heat aging resistance occurs. Contrary to this, when the ethylene oxide content is higher than 40 mol%, a decrease in ozone resistance occurs. When the hydrin rubber as the component (A) is a combination of two or more kinds of hydrin rubbers, the term "hydrin rubber containing 10 to 40 mol% of ethylene oxide" means the total amount of ethylene oxide is 10 to 40 mol%. Any hydrin rubber that satisfies the above-mentioned conditions can be used without any limitation, and examples thereof include an epichlorohydrin polymer rubber (CO), an epichlorohydrinethylene oxide copolymer rubber (ECO), and an epichlorohydrin-ethylene oxide-allylglycidiyl ether copolymer rubber (GECO). These hydrin rubbers may be used alone or as a combination of two or more thereof. Further, the hydrin rubber preferably contains at least 50 mol% of an epichlorohydrin component to the total hydrin rubber, in particular, from the viewpoint of heat resistance and the like.

Examples of the amine-based antioxidant used as the component (B) include aromatic secondary amine-based antioxidants such as N-phenyl-N'-isopropyl-p-phenylenediamine, N-phenyl-N'-(1,3-dimethylbutyl)-p-phenylenediamine, N-phenyl-N'-(1-methylheptyl)-p-phenylenediamine, N-phenyl-N'-(3-methacryloyloxy-2-hydroxypropyl)-p-phenylenediamine, phenyl-α-naphthylamine, alkylated diphenylamine, octylated diphenylamine, 4,4-bis (α,α-dimethylbenzyl)diphenylamine, phenothiazine derivatives, p-(p-toluenesulfonylamide)diphenylamine, N,N'-di-2-naphthyl-p-phenylenediamine, and N,N-diphenyl-p-phenylenediamine; and amine-ketone-based antioxidants such as a 2,2,4-trimethyl-1,2-dihydroquinoline polymer, 6-ethoxy-1,2-dihydro-2,2,4-trimethylquinoline, reaction products of amine and acetone, and reaction products of diphenylamine and acetone.- These amine-based antioxidants may be used alone or as a combination of two or more thereof. Nonflex DCD manufactured by Seiko Chemical Co., Ltd. is an example of such antioxidants.

The content ratio of the amine-based antioxidant as the component (B) is preferably in the range of not less than 0.5 parts by weight (hereinafter abbreviated to "part(s)") and less than 3 parts to 100 parts of the hydrin rubber as the component (A). This is because when the content ratio of the amine-based antioxidant is less than 0.5 parts, the heat resistance or the like cannot be sufficiently improved. Contrary to this, when the content ratio is 3 parts or more, amine reacts with the ether moiety of the hydrin rubber main chain to cleave the main chain, and thereby softening degradation may occur.

Examples of the phenol-based antioxidant used as the component (C) include styrenated phenol, 2,6-di-tert-butyl-4-methylphenol, 3,5-di-tert-butyl-4-hydroxytoluene, 2,6-di-tert-butyl-p-cresol, 2,2'-dihydroxy-3,3'-di(α-methylcyclohexyl)-5,5'-dimethylphenylmethane, 2,2'-methylene-bis[6-(1-methylcyclohexyl-p-cresol)], 4,4'-thio-bis (3-methyl-6-tert-butylphenol), 4,4'-butylidene-bis(3-methyl-6-tert-butylphenol), 2,5-di-tert-butyl-hydroquinone, 2,2'-methylene-bis(4-methyl-6-tert-butylphenol), and 2,2'-methylene-bis(4-ethyl-6-tert-butylphenol). These phenol-based antioxidants may be used alone or as a combination of two or more thereof. BHT SWANOX manufactured by Seiko Chemical Co., Ltd, and NONFLEX MBP manufactured by Seiko Chemical Co., Ltd. are examples of such antioxidants.

The content ratio of the phenol-based antioxidant as the component (C) is preferably in the range of not less than 0.5 parts and less than 3 parts to 100 parts of the hydrin rubber as the component (A). This is because when the content ratio of the phenol-based antioxidant is less than 0.5 parts, the ozone resistance or the like cannot be sufficiently improved. Contrary to this, when the content ratio is 3 or more, the heat resistance is not improved with an increase of the content, and it is observed that blooming of the antioxidant tends to occur on the surface, which may deteriorate the appearance.

The metal dithiocarbamate used as the component (D) does not contain nickel, which is an environmental load material, and examples thereof include zinc dithiocarbamate (specifically, zinc dibutyldithiocarbamate, zinc dimethyldithiocarbamate, and zinc diethyldithiocarbamate), sodium dithiocarbamate (specifically, sodium dibutyldithiocarbamate), ferric dithiocarbamate (specifically, ferric dibutyldithiocarbamate), tellurium dithiocarbamate, and copper dithiocarbamate. These metal dithiocarbamates may be used alone or as a combination of two or more thereof. In particular, zinc dithiocarbamate is preferred from the viewpoints of the ozone resistance and compressive permanent distortion.

The content ratio of the metal dithiocarbamate as the component (D) is preferably in the range of not less than 0.5 parts and less than 3 parts to 100 parts of the hydrin rubber as the component (A). This is because when the content ratio of the metal dithiocarbamate is less than 0.5 parts, such problems arise that the scorching property is deteriorated and a desired interlayer adhesion cannot be obtained when used as a material for a multi-layered hose. Contrary to this, when the content ratio is 3 or more, the compressive permanent distortion and the like are deteriorated.

Examples of the hydrotalcite compound used as the component (E) include Mg_{4.5}Al₂(OH)₁₃CO₃·3.5H₂O, Mg_{4.5}Al₂(OH)₁₃CO₃, Mg₄Al₂(OH)₁₂CO₃·3.5H₂O, Mg₆Al₂(OH)₁₆CO₃·4H₂O, Mg₅Al₂(OH)₁₄CO₃·4H₂O, Mg₃Al₂(OH)₁₀CO₃·1.7H₂O, Mg₃ZnAl₂(OH)₁₂CO₃·wH₂O, and Mg₃ZnAl₂(OH)₁₂CO₃. These hydrotalcite compounds may be used alone or as a combination of two or more thereof. DHT-4A manufactured by Kyowa Chemical Industry Co., Ltd. and DHT-6 manufactured by Kyowa Chemical Industry Co., Ltd. are commercially available examples thereof.

The content ratio of the hydrotalcite compound (E) is preferably in the range of not less than 1 part and less than 15 parts to 100 parts of the hydrin rubber as the component (A). This is because the content ratio of the hydrotalcite compound (E) of less than 1 part is too low to obtain a desired acid-accepting activity and deteriorates the compressive permanent distortion. Contrary to this, when the content ratio exceeds 15 parts, crosslinking excessively proceeds to disadvantageously affect the rubber physical properties and the like.

The hydrin rubber composition according to the present invention contains the aforementioned components (A) to (E) as essential components as described above and can further contain the following component (G) as a co-crosslinking agent according to need:

### (G) a coagent having a double bond.

That is, the presence of a co-crosslinking agent in addition to the components (A) to (E) can attain further excellent ozone resistance.

Examples of the co-crosslinking agent as the component (G) include triallyl isocyanurate (TAIC), diallyl phthalate (DAP), trimethylol propane trimethacrylate, and 1,2-polybutadiene. These co-crosslinking agents may be used alone or as a combination of one or more thereof.

The co-crosslinking agent as the component (G) preferably has a molecular weight of less than 4000 and has at least one double bond. This is because if a co-crosslinking agent having a molecular weight of not less than 4000 is used as the component (G), the co-crosslinking agent may disadvantageously affect the rubber physical properties and the like.

The content ratio of the co-crosslinking agent as the component (G) is preferably in the range of not less than 1 part and less than 10 parts to 100 parts of the hydrin rubber as the component (A). That is, the co-crosslinking agent in this range can attain excellent ozone resistance.

In addition, the hydrin rubber composition according to the present invention may_contain a vulcanizing agent according to need. Examples of the vulcanizing agent include sulfur, 2,3-dimercaptoquinoxaline derivatives, 2,4,6-trimercapto-s-triazine, thiurams such as tetramethylthiuram monosulfide (TMTS), tetramethylthiuram disulfide (TMTD), tetraethylthiuram disulfide (TETD), tetrabutylthiuram disulfide (TBTD), and dipentamethylenethiuram tetrasulfide (DPTT), sulfur-based vulcanizing agents such as 4,4'-dithio-dimorpholine, and resin vulcanizing agents such as an alkylphenol-formaldehyde resin. These vulcanizing agents may be used alone or as a combination of two or more thereof.

The amount of the vulcanizing agent to be blended is preferable in the range of 0.3 to 5 parts and particularly preferably 0.5 to 3 parts to 100 parts of the hydrin rubber as the component (A).

Furthermore, according to need, the hydrin rubber composition according to the present invention may optionally contain additives such as an acid-accepting agent, a vulcanization accelerator, a plasticizer, a filler, a vulcanization retardant, a processing aid, a fire retardant, a scorch inhibitor, a colorant, or a white filler, in addition to each of the above-described components.

Any acid-accepting agent can be used without particular limitation, and an example thereof is magnesium oxide.

Any vulcanization accelerator can be used without particular limitation, and examples thereof include 1,8-diazabicyclo [5.4.0] undecene-7 (DBU) carboxylate (for example, DBU-naphthoate or DBU-sorbate), a DBU-phenol resin salt, as well as thiazole-based, sulfenamide-based, thiuram-based, aldehyde ammonia-based, aldehyde amine-based, guanidine-based, thiourea-based, and ethylene dimethacrylate-based vulcanization accelerators. These may be used alone or as a combination of two or more thereof.

Examples of the plasticizer include ester-based synthetic plasticizers, and particular examples are dioctyl phthalate (DOP), di-n-butyl phthalate (DBP), dioctyl adipate (DOA), dibutyl glycol adipate, dibutyl carbitol adipate, and polyester adipate. These may be used alone or as a combination of two or more thereof.

Examples of the filler include carbon black, silicon dioxide, calcium carbonate, talc, and clay. These may be used alone or as a combination of two or more thereof.

Examples of the vulcanization retardant include N-(cyclohexylthio)phthalimide and phthalic anhydride.

Examples of the processing aid include fatty acids such as stearic acid, oleic acid, and lauric acid and fatty acid esters.

Examples of the fire retardant include antimony trioxide, aluminum hydroxide, magnesium hydroxide, and paraffin chloride.

The hydrin rubber composition according to the present invention can be prepared, for example, by blending a vulcanizing agent and further other additives according to need with each of the aforementioned components (A) to (E) and kneading the mixture using a Banbury mixer or a kneading roll.

The production of a hose using the thus prepared hydrin rubber composition is conducted as follows. For example, in a case of a monolayer structure, the rubber composition for a hose is extrusion molded into a tube shape on a mandrel to form a tube-type hose. In the above, a hose having a monolayer structure is described, but the present invention is not limited thereto. The hydrin rubber composition may be suitably used as a material for forming a rubber layer of a hose having a multilayer structure with two or more layers, for example, as a material for forming a rubber layer of the outermost layer of a multilayer structure.

The hydrin rubber composition according to the present invention is useful for various hoses, for example, an air system hose for vehicles, particularly, an air system hose for exhausting a gas mixture containing gasoline vapor and engine oil mist from an engine and supplying the exhausted gas mixture to the engine for re-burning. More specifically, the hydrin rubber composition is useful as a material for forming an air system heat-resistant hose such as a supercharger hose, a blowby gas hose, or an emission control hose and as a material for forming an outermost rubber layer serving as a coat of a fuel system hose.

As shown in the figure, in the heat-resistant hose according to the present invention having a structure in which a hydrin-based rubber layer 2 is layered directly on the outer surface of an inner layer 1, the inner layer 1 is a layer composed of NBR, NHR-PVC, a fluorine rubber, or a fluorine resin, and the hydrin-based rubber layer 2 is a layer composed of a hydrin rubber composition containing a hydrin rubber containing 10 to 40 mol% of ethylene oxide (component A), an amine-based antioxidant (component B), a phenol-based antioxidant (component C), a nickel-free metal dithiocarbamate (component D), a hydrotalcite compound (component E), and a DBU salt (component F). The heat-resistant hose does not contain nickel which is an environmental load material in the materials for forming the hydrin-based rubber layer 2, and therefore is advantageous for environmental issues and also can exhibit excellent performance in heat aging resistance, ozone resistance, and the like without causing softening degradation or the like of the hydrin rubber. Since the hydrotalcite compound as the component E can exhibit an excellent acid-accepting effect even in the absence of nickel, such hose performance as having rubber physical properties equivalent to those in conventional nickel-containing hoses can be achieved. In addition, since the inner layer is a layer composed of NBR, NBR-PVC, a fluorine rubber, or a fluorine resin, the hose is excellent in fuel oil resistance and has extremely low transmittance (barrier property) of gas, fuel, or the like. Further, the adhesion of the hydrin-based rubber layer 2 to the inner layer can be increased by the functions of the component D (metal dithiocarbamate) and the component F (DBU salt) in the materials for forming the hydrin-based rubber layer 2. Therefore, the heat-resistant hose can be advantageously used as a heat-resistant hose such as an air system hose or a fuel system hose for vehicles.

When the heat-resistant hose has a layered structure as described above, the DBU salt as the component F is indispensable in the materials for forming the hydrin-based rubber layer 2 in order to obtain a sufficient interlayer adhesion of the hydrin-based rubber layer 2 to the inner layer 1 composed of the above-mentioned particular material. Examples of the DBU salt include DBU-carboxylate (preferably, DBU-naphthoate or DBU-sorbate) and DBU-phenol resin salts. The content ratio of the DBU salt as the component (F) in the materials for forming the hydrin-based rubber layer 2 is preferably in the range of not less than 0.1 parts and less than 3 to 100 parts of the hydrin rubber as the component (A). This is because when the DBU salt content is less than 0.1 parts, a desired interlayer adhesion cannot be achieved. Contrary to this, when the content ratio is not less than 3 parts, the crosslinking proceeds excessively to disadvantageously affect the rubber physical properties and the like.

Moreover, each of the components (A) to (E) is indispensable as the materials for forming the hydrin-based rubber layer 2 in the heat-resistant hose. Specific examples, content ratio, and the like of each component are the same as those in the above-described hydrin rubber composition. In addition, specific examples, content ratio, and the like of each optional component (such as a co-crosslinking agent as the component G) which is used in conjunction with the above-mentioned indispensable components according to need are the same as those in the above-described hydrin rubber composition.

The heat-resistant hose shown in the figure is manufactured, for example, as follows. First, a composition for the inner layer 1 is prepared by using NBR, NBR-PVC, a fluorine rubber, or a fluorine resin. Separately, a composition for the hydrin-based rubber layer 2 is prepared by kneading materials for the components (A) to (F) and materials for other optional components according to need with a kneading machine such as a roller, a kneader, or a Banbury mixer. Next, the composition for the inner layer 1 is extrusion molded into a tube shape, and then the composition for the hydrin-based rubber layer 2 is extrusion molded directly on the surface (outer surface) of the inner layer 1 without application of an adhesive (adhesiveless). These layers are vulcanized to achieve a heat-resistant hose having the hydrin-based rubber layer 2 layered on the outer surface of the inner layer 1. Alternatively, these layers may be formed by co-extrusion.

The heat-resistant hose thus obtained has a hose inner diameter preferably in the range of 3 to 100 mm and particularly preferably in the range of 5 to 70 mm. The inner layer 1 has a thickness preferably in the range of 0.2 to 2 mm and particularly preferably in the range of 0.3 to 1.5 mm. The hydrin-based rubber layer 2 has a thickness preferably in the range of 0.3 to 10 mm and particularly preferably in the range of 0.5 to 5 mm.

In the present invention, a reinforcing cord layer or a reinforcing wire layer composed of a braided woven vinylon (polyvinyl alcohol) thread, polyamide (nylon) thread, aramide thread, polyester thread, rayon thread, or the like may be formed between the inner layer 1 and the hydrin-based rubber layer 2 or on the outer surface of the hose according to need.

The heat-resistant hose thus obtained is useful as various hoses, for example, an air system hose for vehicles, particularly, an air system hose for exhausting a gas mixture containing gasoline vapor and engine oil mist from an engine and supplying the exhausted gas mixture to the engine for re-burning. More specifically, the heat-resistant hose is useful as an air system heat-resistant hose such as a supercharger hose, a blowby gas hose, or an emission control hose as well as a fuel system hose.

Next, Examples will be described in conjunction with Comparative Examples.

First, each component was prepared prior to Examples.

### [Hydrin rubber A]

ECO (Epichlomer C, ethylene oxide amount: 51 mol%, manufactured by Daiso Co., Ltd.)

### [Hydrin rubber B]

CO (Epichlomer H, ethylene oxide amount: 0 mol%, manufactured by Daiso Co., Ltd.)

### [Hydrin rubber C]

ECO (Epichlomer CG, ethylene oxide content: 41 mol%, manufactured by Daiso Co., Ltd.)

### [Processing aid A]

Stearic acid (LUNAC S30 manufactured by Kao Corp.)

### [Processing aid B]

Fatty acid ester (EMASTER 510P manufactured by Riken Vitamin Co., Ltd.)

### [Antioxidant A]

Nickel dibutyldithiocarbamate (NOCRAC NBC manufactured by Ouchi Shinko Chemical Industrial Co., Ltd.)

### [Antioxidant B]

Amine-based antioxidant (NONFLEX DCD manufactured by Seiko Chemical Co., Ltd.)

### [Antioxidant C]

Phenol-based antioxidant (BHT SWANOX manufactured by Seiko Chemical Co., Ltd.)

### [Antioxidant D]

Zinc dibutyldithiocarbamate (NOCCELER BZ manufactured by Ouchi Shinko Chemical Industrial Co., Ltd.)

### [Antioxidant E]

Sodium dibutyldithiocarbamate (NOCCELER TP manufactured by Ouchi Shinko Chemical Industrial Co., Ltd.)

### [Co-crosslinking agent A]

Triallyl isocyanurate (TAIC) (TAIC-M60 manufactured by Nippon Kasei Chemical Co., Ltd.)

### [Co-crosslinking agent B]

Diallyl phthalate (DAP) (manufactured by Sumitomo Chemical Co., Ltd.)

### [Co-crosslinking agent C]

1,2-Polybutadiene (PB-3000 manufactured by Nippon Soda Co., Ltd.)

### [Co-crosslinking agent D]

Polybutadiene rubber (NIPOL BR-1220 manufactured by Nippon Zeon Co., Ltd.)

### [Acid-accepting agent A]

Hydrotalcite (DHT-4A manufactured by Kyowa Chemical Industry Co., Ltd.)

### [Acid-accepting agent B]

Magnesium oxide (KYOWA MAG #150 manufactured by Kyowa Chemical Industry Co., Ltd.)

### [Carbon]

SRF (Semi Reinforcing Furnace) grade black carbon (SEAST S manufactured by Tokai Carbon Co., Ltd.)

### [Plasticizer]

Adipic acid ether ester-based plasticizer (ADEKA CIZER RS-107 manufactured by Adeka Corporation)

### [Vulcanization accelerator]

DBU-naphthoate (DA-500 manufactured by Daiso Co., Ltd.)

### [Vulcanizing agent]

6-methylquinoxaline-2,3-dithiocarbonate (DAISONET XL-21S manufactured by Daiso Co., Ltd.)

### [Vulcanization retardant]

N-(Cyclohexylthio)phthalimide (SANTOGARD PVI manufactured by Monsanto Company)

### EXAMPLES

### [Examples 1 to 7, Comparative Examples 1 to 7, and Conventional Example 1]

The above-mentioned components (excluding the vulcanizing agent and the vulcanization retardant) were blended in the ratios shown in the following Tables 1 and 2, and each of the resulting mixtures was mixed with a Banbury mixer. Then, the vulcanizing agent and the vulcanization retardant were added thereto in the ratios shown in the following Tables 1 and 2. Each of the resulting mixtures was kneaded with a roller to give a hydrin rubber composition.

**Table 1**

| (part(s) by weight) | | | | | | | | |
|---|---|---|---|---|---|---|---|---|
| | | Example | | | | | | |
| | | 1 | 2 | 3 | 4 | 5 | 6 | 7 |
| Hydrin rubber | A | 60 | 60 | 60 | 60 | 60 | 60 | 60 |
| | B | 40 | 40 | 40 | 40 | 40 | 40 | 40 |
| | C | - | - | - | - | - | - | - |
| Processing aid | A | 2 | 2 | 2 | 2 | 2 | 2 | 2 |
| | B | 2 | 2 | 2 | 2 | 2 | 2 | 2 |
| Antioxidant | A | - | - | - | - | - | - | - |
| | B | 0.5 | 0.5 | 1 | 0.5 | 0.5 | 0.5 | 0.5 |
| | C | 1 | 2 | 1 | 1 | 1 | 1 | 1 |
| | D | 1 | 1 | 2 | 1 | 1 | 1 | - |
| | E | - | - | - | - | - | - | 1 |
| Co-crosslinking agent | A | - | - | - | 5 | - | - | - |
| | B | - | - | - | - | 5 | - | 5 |
| | C | - | - | - | - | - | 5 | - |
| | D | - | - | - | - | - | - | - |
| Acid-accepting agent | A | 3 | 3 | 3 | 3 | 3 | 3 | 3 |
| | B | 1.5 | 1.5 | 1.5 | 1.5 | 1.5 | 1.5 | 1.5 |
| Carbon | | 70 | 70 | 70 | 70 | 70 | 70 | 70 |
| Plasticizer | | 5 | 5 | 5 | 5 | 5 | 5 | 5 |
| Vulcanization accelerator | | 1 | 1 | 1 | 1 | 1 | 1 | 1 |
| Vulcanizing agent | | 1.2 | 1.2 | 1.2 | 1.2 | 1.2 | 1.2 | 1.2 |
| Vulcanization retardant | | 1 | 1 | 1 | 1 | 1 | 1 | 1 |

**Table 2**

| (part(s) by weight) | | | | | | | | | |
|---|---|---|---|---|---|---|---|---|---|
| | | Comparative Example | | | | | | | Conventional Example 1 |
| | | 1 | 2 | 3 | 4 | 5 | 6 | 7 | |
| Hydrin rubber | A | 100 | 10 | 60 | 60 | 60 | 60 | 60 | 50 |
| | B | - | 90 | 40 | 40 | 40 | 40 | 40 | - |
| | C | - | - | - | - | - | - | - | 50 |
| Processing aid | A | 2 | 2 | 2 | 2 | 2 | 2 | 2 | 2 |
| | B | 2 | 2 | 2 | 2 | 2 | 2 | 2 | 2 |
| Antioxidant | A | - | - | - | - | - | - | - | 2 |
| | B | 0.5 | 0.5 | - | 0.5 | 0.5 | 0.5 | 0.5 | - |
| | C | 1 | 1 | 1 | - | 1 | 1 | 1 | - |
| | D | 1 | 1 | 1 | 1 | - | 1 | 1 | - |
| Co-crosslinking agent | A | - | - | - | - | - | - | - | - |
| | B | - | - | - | - | - | - | - | - |
| | C | - | - | - | - | - | - | - | - |
| | D | - | - | - | - | - | - | 5 | - |
| Acid-accepting agent | A | 3 | 3 | 2 | 6 | 3 | - | - | 3 |
| | B | 1.5 | 1.5 | 1.5 | 1.5 | 1.5 | 1,5 | 1,5 | 1.5 |
| Carbon | | 70 | 70 | 70 | 70 | 70 | 70 | 70 | 70 |
| Plasticizer | | 5 | 5 | 5 | 5 | 5 | 5 | 5 | 5 |
| Vulcanization accelerator | | 1 | 1 | 1 | 1 | 1 | 1 | 1 | 1 |
| Vulcanizing agent | | 1,2 | 1.2 | 1.2 | 1.2 | 1.2 | 1.2 | 1.2 | 1.2 |
| Vulcanization retardant | | 1 | 1 | 1 | 1 | 1 | 1 | 1 | 1 |

The hydrin rubber compositions thus prepared were measured and evaluated for various characteristics according to the following methods.

### [Unvulcanized physical properties]

A scorch time (St. 5p) (min) for increasing a viscosity torque value (absolute value) by 5 points from the minimum Mooney value was measured with a Mooney viscometer manufactured by Toyo Seiki Seisaku-sho Ltd. Then, a composition with a scorch time of not less than 10 minutes was evaluated as good, and a composition with a scorch time of less than 10 minutes was evaluated as bad.

### [Physical properties under normal conditions]

Unvulcanized rubber sheets having a thickness of 2 mm were produced using the hydrin rubber compositions with a mixing roll. Then, these sheets were subjected to press vulcanization at 160°C for 45 minutes to obtain rubber sheets. Each of the rubber sheets was punched with a JIS dumbbell No. 5 to produce vulcanized rubber test pieces. Each piece was measured for tensile strength (TS) at break and elongation (Eb) at break according to JIS K 6251. A test piece satisfying the requirements that the tensile strength (TS) at break was not less than 9 MPa and the elongation (Eb) at break was not less than 300% was evaluated as good, and a piece not satisfying these requirements was evaluated as bad.

### [Compressive permanent distortion]

The above-prepared rubber sheets were formed into vulcanized rubber test pieces each having a shape and a size according to JIS K 6262. These test pieces were measured for compressive permanent distortion under measurement conditions of a temperature of 125°C and a test time of 72 hours according to JIS K 6262. A test piece having a compressive permanent distortion of 50% or less was evaluated as good, and a test piece having a compressive permanent distortion higher than 50% was evaluated as bad.

### [Heat aging resistance]

Each of the rubber sheets was punched with a JIS dumbbell No. 5 to produce vulcanized rubber test pieces. Each test piece was left in an atmosphere at a high temperature of 150°C for 72 hours and then subjected to a heat aging resistance test. In like manner as for the above-mentioned physical properties under normal conditions, each piece was measured for tensile strength (TS) at break and elongation (Eb) at break according to JIS K 6251. A test piece satisfying the requirements that the tensile strength (TS) at break was not less than 6 MPa and the elongation (Eb) at break was not less than 100% was evaluated as good, and a test piece not satisfying these requirements was evaluated as bad.

### [Dynamic ozone resistance]

The vulcanized rubber test pieces produced from the aforementioned rubber sheets were each subjected to repeated extension for 0 to 30% according to JIS K 6259 in an atmosphere of 40°C with the ozone concentration of 50 pphm to perform the evaluation of ozone resistance (test time: 168 hours). In this test, a test piece suffering no crack during the test time was evaluated as good, and a test piece suffering any crack was evaluated as bad.

The following Tables 3 and 4 show the results of these measurements and evaluations together with the ethylene oxide amounts (mol%) in hydrin rubber polymers and the presence or absence of nickel. The "total judgment" shown in the Tables is a judgment based on the measurement and evaluation results of the above-described characteristics. A test piece not containing nickel and not having any item evaluated as bad was evaluated as good, and an otherwise test piece was evaluated as bad.

**Table 3**

| | | Example | | | | | | |
|---|---|---|---|---|---|---|---|---|
| | | 1 | 2 | 3 | 4 | 5 | 6 | 7 |
| Ethylene oxide amount in polymer (mol%) | | 30.6 | 30.6 | 30.6 | 30.6 | 30.6 | 30.6 | 30.6 |
| Presence of Ni | | No | No | No | No | No | No | No |
| Unvulcanized | St.5p (min) | 16 | 16 | 19 | 15 | 15 | 15 | 11 |
| physical properties | Evaluation | Good | Good | Good | Good | Good | Good | Good |
| Physical properties under normal conditions | TS (MPa) | 11.2 | 10.7 | 11.4 | 11.2 | 11.5 | 11.3 | 11.5 |
| | Eb (%) | 380 | 370 | 390 | 370 | 370 | 380 | 360 |
| | Evaluation | Good | Good | Good | Good | Good | Good | Good |
| Compressive permanent distortion | Measurement value (%) | 46 | 45 | 42 | 46 | 43 | 46 | 48 |
| | Evaluation | Good | Good | Good | Good | Good | Good | Good |
| Heat aging resistance | TS (MPa) | 8.0 | 7.9 | 8.2 | 7.8 | 7.6 | 7.8 | 7.6 |
| | Eb(%) | 120 | 130 | 120 | 120 | 170 | 150 | 130 |
| | Evaluation | Good | Good | Good | Good | Good | Good | Good |
| Dynamic ozone resistance | | Good | Good | Good | Good | Good | Good | Good |
| Total judgment | | Good | Good | Good | Good | Good | Good | Good |

**Table 4**

| | | Comparative Example | | | | | | | Conventional |
|---|---|---|---|---|---|---|---|---|---|
| | | 1 | 2 | 3 | 4 | 5 | 6 | 7 | Example 1 |
| Ethylene oxide amount in polymer (mol%) | | 51 | 5.1 | 30.6 | 30.6 | 30.6 | 30.6 | 30.6 | 46 |
| Presence of Ni | | No | No | No | No | No | No | No | Yes |
| Unvulcanized physical properties | St. 5p (min) | 15 | 17 | 16 | 19 | 5 | 3 | 3 | 22 |
| | Evaluation | Good | Good | Good | Good | Bad | Bad | Bad | Good |
| Physical properties under normal conditions | TS (MPa) | 10.2 | 10.4 | 11.2 | 8.4 | 10.7 | 10.8 | 7.2 | 11.8 |
| | Eb (%) | 380 | 370 | 380 | 530 | 320 | 360 | 490 | 380 |
| | Evaluation | Good | Good | Good | Bad | Good | Good | Bad | Good |
| Compressive permanent distortion | Measurement value (%) | 35 | 32 | 46 | 82 | 49 | 46 | 80 | 37 |
| | Evaluation | Good | Good | Good | Bad | Good | Good | Bad | Good |
| Heat aging resistance | TS (MPa) | 4.3 | 8.7 | 6.2 | 7.0 | 7.2 | 9.5 | 8.1 | 8.4 |
| | Eb (%) | 100 | 250 | 80 | 160 | 150 | 140 | 80 | 130 |
| | Evaluation | Bad | Good | Bad | Good | Good | Good | Bad | Good |
| Dynamic ozone resistance | | Good | Bad | Bad | Bad | Bad | Bad | Good | Good |
| Total judgment | | Bad | Bad | Bad | Bad | Bad | Bad | Bad | Bad |

As shown by the above results, the products of the Examples using the nickel-free rubber compositions were excellent in heat aging resistance and dynamic ozone resistance as in Conventional Example 1 where nickel dibutyldithiocarbamate (antioxidant A) is used. Also, the products of the Examples showed favorable results in compressive permanent distortion, unvulcanized physical properties, and physically properties under normal conditions. In addition, it was confirmed by experiments that when ferric dithiocarbamate, tellurium dithiocarbamate, copper dithiocarbamate, or the like is used instead of metal, dithiocarbamates (zinc dithiocarbamate or sodium dithiocarbamate) of the Examples, obtained results were inferior to those of the Examples in compressive permanent distortion and the like. Except this point, however, such products showed excellent results like the Examples, as compared with the results of the Comparative Examples.

On the other hand, the product of Comparative Example 1 including a polymer containing an excessively high amount of ethylene oxide had a low tensile strength (TS) at break after heat aging treatment and showed a decrease in heat resistance. The product of Comparative Example 2 including a polymer containing an excessively low amount of ethylene oxide was poor in dynamic ozone resistance. The product of Comparative Example 3 containing no amine-based antioxidants was unable to attain a desired dynamic ozone resistance. The product of Comparative Example 4 containing no phenol-base antioxidants was poor in physical properties under normal conditions and compressive permanent distortion, and the product of Comparative Example 5 containing no metal dithiocarbamates was poor in unvulcanized physical properties and dynamic ozone resistance. The product of Comparative Example 6 containing no hydrotalcite was poor in unvulcanized physical properties and dynamic ozone resistance. The product of Comparative Example 7 containing a coagent with a molecular weight of not less than 4000 was poor in unvulcanized physical properties and physical properties under normal conditions.

Further, it was confirmed by experiments that the hoses produced by extrusion molding the hydrin rubber compositions of the aforementioned Examples into a tube shape were each useful as an air system hose circulating a gas mixture containing gasoline vapor and engine oil mist. Furthermore, it was confirmed that even if no nickel compound such as nickel dibutyldithiocarbamate was contained, the hoses were excellent in heat aging resistance, ozone resistance, and the like.

### [Examples 8 to 14, Comparative Examples 8 to 15, and Conventional Example 2]

A hundred parts of a tertiary copolymer of vinylidene fluoride, propylene hexafluoride, and ethylene tetrafluorine (DAI-EL G555 manufactured by Daikin Industries, Ltd.), 13 parts of SRF grade carbon black, 3 parts of MgO #150, and 6 parts of Ca(OH)₂ were kneaded with a 5L kneader to prepare a fluorine rubber composition (for inner layer).

Then, the above-mentioned components (excluding vulcanizing agent and vulcanization retardant) were blended in the ratios shown in the following Tables 5 and 6, and each of the resulting mixtures was mixed with a Banbury mixer. Then, the vulcanizing agent and the vulcanization retardant were added thereto in the ratios shown in the following Tables 5 and 6. Each resulting mixture was kneaded with a roller to give a hydrin rubber composition (for outer layer).

**Table 5**

| (part(s) by weight) | | | | | | | | |
|---|---|---|---|---|---|---|---|---|
| | | Example | | | | | | |
| | | 8 | 9 | 10 | 11 | 12 | 13 | 14 |
| Hydrin rubber | A | 60 | 60 | 60 | 60 | 60 | 60 | 60 |
| | B | 40 | 40 | 40 | 40 | 40 | 40 | 40 |
| | C | - | - | - | - | - | - | - |
| Processing aid | A | 2 | 2 | 2 | 2 | 2 | 2 | 2 |
| | B | 2 | 2 | 2 | 2 | 2 | 2 | 2 |
| Antioxidant | A | - | - | - | - | - | - | - |
| | B | 0.5 | 0.5 | 1 | 0.5 | 0.5 | 0.5 | 0.5 |
| | C | 1 | 2 | 1 | 1 | 1 | 1 | 1 |
| | D | 1 | 1 | 2 | 1 | 1 | 1 | - |
| | E | - | - | - | - | - | - | 1 |
| Co-crosslinking agent | A | - | - | - | 5 | - | - | - |
| | B | - | - | - | - | 5 | - | 5 |
| | C | - | - | - | - | - | 5 | - |
| | D | - | - | - | - | - | - | - |
| Acid-accepting agent | A | 3 | 3 | 3 | 3 | 3 | 3 | 3 |
| | B | 1.5 | 1.5 | 1.5 | 1.5 | 1.5 | 1.5 | 1.5 |
| Carbon | | 70 | 70 | 70 | 70 | 70 | 70 | 70 |
| Plasticizer | | 5 | 5 | 5 | 5 | 5 | 5 | 5 |
| Vulcanization accelerator | | 1 | 1 | 1 | 1 | 1 | 1 | 1 |
| Vulcanizing agent | | 1.2 | 1.2 | 1.2 | 1.2 | 1.2 | 1.2 | 1.2 |
| Vulcanization retardant | | 1 | 1 | 1 | 1 | 1 | 1 | 1 |

**Table 6**

| (part(s) by weight) | | | | | | | | | | |
|---|---|---|---|---|---|---|---|---|---|---|
| | | Comparative Example | | | | | | | | Conventional |
| | | 8 | 9 | 10 | 11 | 12 | 13 | 14 | 15 | Example 2 |
| Hydrin rubber | A | 100 | 10 | 60 | 60 | 60 | 60 | 60 | 60 | 50 |
| | B | - | 90 | 40 | 40 | 40 | 40 | 40 | 40 | - |
| | C | - | - | - | - | - | - | - | - | 50 |
| Processing aid | A | 2 | 2 | 2 | 2 | 2 | 2 | 2 | 2 | 2 |
| | B | 2 | 2 | 2 | 2 | 2 | 2 | 2 | 2 | 2 |
| Antioxidant | A | - | - | - | - | - | - | - | - | 2 |
| | B | 0.5 | 0.5 | - | 0.5 | 0.5 | 0.5 | 0.5 | 0.5 | - |
| | C | 1 | 1 | 1 | - | 1 | 1 | 1 | 1 | - |
| | D | 1 | 1 | 1 | 1 | - | 1 | 1 | 1 | - |
| Co-crosslinking agent | A | - | - | - | - | - | - | - | - | - |
| | B | - | - | - | - | - | - | - | - | - |
| | C | - | - | - | - | - | - | - | - | - |
| | D | - | - | - | - | - | - | - | 5 | - |
| Acid-accepting agent | A | 3 | 3 | 2 | 6 | 3 | - | 3 | - | 3 |
| | B | 1.5 | 1.5 | 1.5 | 1.5 | 1.5 | 1.5 | 1.5 | 1.5 | 1.5 |
| Carbon | | 70 | 70 | 70 | 70 | 70 | 70 | 70 | 70 | 70 |
| Plasticizer | | 5 | 5 | 5 | 5 | 5 | 5 | 5 | 5 | 5 |
| Vulcanization accelerator | | 1 | 1 | 1 | 1 | 1 | 1 | - | 1 | 1 |
| Vulcanizing agent | | 1.2 | 1.2 | 1.2 | 1.2 | 1.2 | 1.2 | 1.2 | 1.2 | 1.2 |
| Vulcanization retardant | | 1 | 1 | 1 | 1 | 1 | 1 | 1 | 1 | 1 |

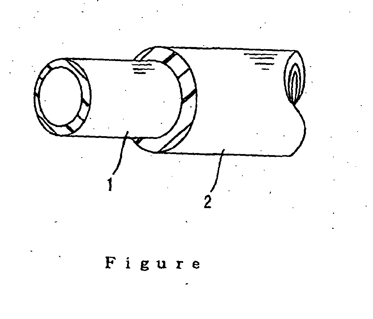

The foregoing previously prepared material compositions for each layer (fluorine rubber composition and hydrin-based rubber composition) were each co-extrusion molded and heated at 160°C for 45 minutes for steam vulcanization to produce a heat-resistant hose in which a hydrin-based rubber layer is layered on the outer surface a fluorine rubber layer (refer to Fig. 1). This heat-resistant hose has'a fluorine rubber layer with a thickness of 1 mm, a hydrin-based rubber layer with a thickness of 3 mm, a hose inner diameter of 25 mm, and a hose outer diameter of 33 mm.

Thus produced heat-resistant hoses were measured and evaluated for such characteristics as physical properties under normal conditions, compressive permanent distortion, heat aging resistance, dynamic ozone resistance, and interlayer adhesion thereof. The physical properties under normal conditions, compressive permanent distortion, heat aging resistance, and dynamic ozone resistance were measured and evaluated using a rubber sheet comprised of a composition (hydrin-based rubber composition) for the outer layer of each heat-resistant hose. The measurement and evaluation were conducted in the same manner as in the aforementioned Examples 1 to 8. The interlayer adhesion was measured and evaluated by the following method.

### [Interlayer adhesion]

A test piece having a width of 25.4 mm was cut out from each heat-resistant hose, and the outer layer of the test piece was peeled off at a peeling rate of 50 mm/min using a tensile tester (JIS B 7721) to measure interlayer adhesion strength (N/cm) at the time. A test piece having an interlayer adhesion strength of not less than 25 N/cm was evaluated as good, and a test piece having an interlayer adhesion of less than 25 N/cm was evaluated as bad.

The following Tables 7 and 8 show the results of these measurements and evaluations, together with the ethylene oxide amounts (mol%) in polymers of the compositions for the hydrin-based rubber layers (outer layers) and "yes" or "no" of the presence of nickel. The "total judgment" shown in the Tables was made based on the measurement and evaluation results of the above-described characteristics. A test piece containing no nickel and having no item evaluated as bad was evaluated as good, and an otherwise test piece was evaluated as bad.

**Table 7**

| | | | Example | | | | | | |
|---|---|---|---|---|---|---|---|---|---|
| | | | 8 | 9 | 10 | 11 | 12 | 13 | 14 |
| Ethylene oxide amount in polymer (mol%) | | | 30.6 | 30.6 | 30.6 | 30.6 | 30.6 | 30.6 | 30.6 |
| Presence of Ni | | | No | No | No | No | No | No | No |
| Physical properties under normal conditions | | TS (MPa) | 11.2 | 10.7 | 11.4. | 11.2 | 11.5 | 11.3 | 11.5 |
| | | Eb (%) | 380 | 370 | 390 | 370 | 370 | 380 | 360 |
| | | Evaluation | Good | Good | Good | Good | Good | Good | Good |
| Compressive permanent distortion | | Measurement value (%) | 46 | 45 | 42 | 46 | 43 | 46 | 48 |
| | | Evaluation | Good | Good | Good | Good | Good | Good | Good |
| Neat aging resistance | | TS (MPa) | 8.0 | 7.9 | 8.2 | 7.8 | 7.6 | 7.8 | 7.6 |
| | | Eb (%) | 120 | 130 | 120 | 120 | 170 | 150 | 130 |
| | | Evaluation | Good | Good | Good | Good | Good | Good | Good |
| Dynamic ozone resistance | | | Good | Good | Good | Good | Good | Good | Good |
| Interlayer adhesion | Adhesion strength (N/cm) | | 26 | 27 | 40 | 29 | 28 | 28 | 29 |
| | Evaluation | | Good | Good | Good | Good | Good | Good | Good |
| Total judgment | | | Good | Good | Good | Good | Good | Good | Good |

**Table 8**

| | | Comparative Example | | | | | | | | Conventional Example 2 |
|---|---|---|---|---|---|---|---|---|---|---|
| | | 8 | 9 | 10 | 11 | 12 | 13 | 14 | 15 | |
| Ethylene oxide amount in polymer (mol%) | | 51 | 5.1 | 30.6 | 30.6 | 30.6 | 30.6 | 30.6 | 30.6 | 46 |
| Presence of Ni | | No | No | No | No | No | No | No | No | Yes |
| Physical | TS (MPa) | 10.2 | 10.4 | 11.2 | 8.4 | 10.7 | 10.8 | 1.8 | 7.2 | 11.8 |
| properties under | Eb (%) | 380 | 370 | 380 | 530 | 320 | 360 | 560 | 490 | 380 |
| normal conditions | Evaluation | Good | Good | Good | Bad | Good | Good | Bad | Bad | Good |
| Compressive permanent distortion | Measurement value (%) | 35 | 32 | 46 | 82 | 49 | 46 | 100 | 80 | 37 |
| | Evaluation | Good | Good | Good | Bad | Good | Good | Bad | Bad | Good |
| Heat aging resistance | TS(MPa) | 4.3 | 8.7 | 6.2 | 7.0 | 7.2 | 9.5 | 7.6 | 8.1 | 8.4 |
| | Eb (%) | 100 | 250 | 80 | 160 | 150 | 140 | 180 | 80 | 130 |
| | Evaluation | Bad | Good | Bad | Good | Good | Good | Good | Bad | Good |
| Dynamic ozone resistance | | Good | Bad | Bad | Bad | Bad | Bad | Bad | Good | Good |
| Interlayer adhesion | Adhesion strength (N/cm) | 20 | 32 | 27 | 28 | 10 | 24 | 3 | 26 | 32 |
| | Evaluation | Bad | Good | Good | Good | Bad | Bad | Bad | Good | Good |
| Total judgment | | Bad | Bad | Bad | Bad | Bad | Bad | Bad | Bad | Bad |

As shown by the above results, the hoses of Examples 8 to 14 were excellent in heat aging resistance and dynamic ozone resistance in the outer layer, as in Conventional Example 2 where nickel dibutyldithiocarbamate (antioxidant A) is used, and also favorable in compressive permanent distortion and physical properties under normal conditions. Thus, it was confirmed that the hoses of Examples 8 to 14 were excellent in physical properties such as heat resistance. In addition, the interlayer adhesion in each of the Examples was given excellent results. Further, it was confirmed by experiments that when ferric dithiocarbamate, tellurium dithiocarbamate, copper dithiocarbamate, or the like is used instead of metal dithiocarbamates (zinc dithiocarbamate or sodium dithiocarbamate) used as materials for the hose outer layers of Examples 8 to 14, obtained results were inferior to those of Examples 8 to 14 in compressive permanent distortion and the like. Except this point, however, such products showed excellent results like Examples 8 to 14, as compared with the results of Comparative Examples 8 to 15.

On the other hand, the hose of Comparative Example 8 where the materials of the outer layer includes a polymer containing an excessively high amount of ethylene oxide had a low tensile strength (TS) at break after heat aging treatment and showed a decrease in heat resistance. The hose of Comparative Example 9 including a polymer containing an excessively low amount of ethylene oxide was poor in dynamic ozone resistance. The hose of Comparative Example 10 containing no amine-based antioxidants was unable to attain a desired dynamic ozone resistance. The hose of Comparative Example 11 containing no phenol-base antioxidants was poor in physical properties under normal conditions and compressive permanent distortion, and the hose of Comparative Example 12 containing no metal dithiocarbamates was poor in interlayer adhesion and dynamic ozone resistance. The hose of Comparative Example 13 containing no hydrotalcite was poor in interlayer adhesion and dynamic ozone resistance. In addition to the foregoing, the product of Comparative Example 14 containing no DBU salt was poor in physical properties under normal conditions and compressive permanent distortion. The hose of Comparative Example 15 containing a coagent with a molecular weight of not less than 4000 was poor in physical properties under normal conditions, compressive permanent distortion, and heat aging resistance. Therefore, the hoses of Comparative Examples were not imparted with performances required of the heat-resistant hose of the present invention.

Furthermore, in the hoses of Examples 8 to 14, it was confirmed by experiments that hoses including NBR, NBR-PVC, or a fluorine resin (THV) as the inner layer material also had excellent performances as heat-resistant hoses like the hose including a fluorine rubber as the inner layer material. That is, for example, the hoses of Examples 8 and 11 and Comparative Examples 8 and 12 each including NBR, NBR-PVC, or a fluorine resin (THV) as the inner layer material were subjected to interlayer adhesion strength evaluation according to the aforementioned measurement criteria. According to the results shown in Table 9, the hoses of Examples were high in interlayer adhesion, but the hoses of Comparative Examples were not imparted with a desired interlayer adhesion strength.

**Table 9**

| | | | Example | | Comparative Example | |
|---|---|---|---|---|---|---|
| | | | 8 | 11 | 8 | 12 |
| Interlayer adhesion | NBR | Adhesion (N/cm) | 40 | 41 | 21 | 12 |
| | | Evaluation | Good | Good | Bad | Bad |
| | NBR-PVC | Adhesion (N/cm) | 38 | 39 | 20 | 11 |
| | | Evaluation | Good | Good | Bad | Bad |
| | THV | Adhesion (N/cm) | 25 | 26 | 18 | 1 |
| | | Evaluation | Good | Good | Bad | Bad |
| Total judgment | | | Good | Good | Bad | Bad |

As in the foregoing, it was confirmed by experiments that even when NBR, NBR-PVC, or THV was used as inner layer' material and sodium dithiocarbamate, ferric dithiocarbamate, tellurium dithiocarbamate, copper dithiocarbamate, or the like was used as metal dithiocarbamate contained in the material for the hose outer layer (hydrin-based rubber layer), each interlayer adhesion result was excellent as in the aforementioned Examples.

Furthermore, all heat-resistant hoses of the above-described Examples were confirmed by experiments to have extremely low transmittance (barrier property) of gas, fuel, or the like and to be useful as air system hoses for circulating a gas mixture containing gasoline vapor and engine oil mist. In addition, it was confirmed that the hoses were excellent in heat aging resistance, ozone resistance, and the like even if the hose-forming materials did not contain nickel compounds such as nickel dibutyldithiocarbamate.

The hydrin rubber composition according to the present invention is free from nickel and is excellent in heat aging resistance, ozone resistance, storage stability, and the like. Therefore, the hydrin rubber composition is useful as a material for forming the outermost layer and the like of various hoses, for example, an air system hose for vehicles, particularly, a fuel system hose and an air system hose for exhausting a gas mixture containing gasoline vapor and engine oil mist from an engine and supplying the exhausted gas mixture to the engine for re-burning.

Furthermore, the heat-resistant hose according to the present invention including an inner layer of NBR, NBR-PVC, a fluorine rubber, or a fluorine resin and an outer layer layered directly on the outer surface of the inner layer and including the above-described specific hydrin rubber composition (containing a DBU salt for imparting interlayer adhesion) has, in addition to the aforementioned characteristics, excellent fuel oil resistance and extremely low transmittance (barrier property) of gas, fuel, or the like. Therefore, the heat-resistant hose is excellent particularly as an air system hose or a fuel system hose for vehicles.

## Claims

1. A hydrin rubber composition comprising the following components (A) to (E) as essential components:
(A) a hydrin rubber containing 10 to 40 mol% of ethylene oxide;
(B) an amine-based antioxidant;
(C) a phenol-based antioxidant;
(D) a metal dithiocarbamate excluding nickel salts; and
(E) a hydrotalcite compound.

2. The hydrin rubber composition according to Claim 1,
wherein the metal dithiocarbamate as the component (D).is zinc dithiocarbamate.

3. The hydrin rubber composition according to Claim 1 or 2 further comprising the following component (G):
(G) a coagent having a double bond.

4. The hydrin rubber composition according to Claim 3,
wherein the component (G) has a low molecular weight of less than 4000 and has at least one double bond.

5. The hydrin rubber composition according to any one of Claims 1 to 4, wherein the component (B) has a content ratio in the range of not less than 0.5 part by weight and less than 3 parts by weight to 100 parts by weight of the component (A).

6. The hydrin rubber composition according to any one of Claims 1 to 5, wherein the component (C) has a content ratio in the range of not less than 0.5 part by weight and less than 3 parts by weight to 100 parts by weight of the component (A).

7. The hydrin rubber composition according to any one of Claims 1 to 6, wherein the component (D) has a content ratio in the range of not less than 0.5 part by weight and less than 3.parts by weight to 100 parts by weight of the component (A).

8. The hydrin rubber composition according to any one of Claims 3 to 7, wherein the component (G) has a content ratio in the range of not less than 1 part by weight and less than 10 parts by weight to 100 parts by weight of the component (A).

9. A heat-resistant hose having a layered structure comprising:
an inner layer including an acrylonitrile-butadiene rubber, a blended rubber composed of acrylonitrile-butadiene and polyvinyl chloride, a fluorine rubber, or a fluorine resin; and
a hydrin-based rubber layer disposed on the outer surface of the inner layer,
wherein the hydrin-based rubber layer includes a rubber composition comprising the following components (A) to (F) as essential components:
(A) a hydrin rubber containing 10 to 40 mol% of ethylene oxide;
(B) an amine-based antioxidant;
(C) a phenol-based antioxidant;
(D) a metal dithiocarbamate excluding nickel salts;
(E) a hydrotalcite compound; and
(F) a 1,8-diazabicyclo[5.4.0]undecene-7 salt.

10. The heat-resistant hose according to Claim 9,
wherein the metal dithiocarbamate as the component (D) in the rubber composition for forming the hydrin-based rubber layer is zinc dithiocarbamate.

11. The heat-resistant hose according to Claim 9 or 10,
wherein the hydrin-based rubber layer includes, in addition to the components (A) to (F), a rubber composition comprising the following component (G):
(G) a coagent having a double bond.

12. The heat-resistant hose according to Claim 11,
wherein the component (G) in the rubber composition for forming the hydrin-based rubber layer has a low molecular weight of less than 4000 and has at least one double bond.

13. The heat-resistant hose according to any one of Claims 9 to 12, wherein the component (B) has a content ratio in the range of not less than 0.5 part by weight and less than 3 parts by weight to 100 parts by weight of the component (A) in the rubber composition for forming the hydrin-based rubber layer.

14. The heat-resistant hose according to any one of Claims 9 to 13, wherein the component (C) has a content ratio in the range of not less than 0.5 part by weight and less than 3 parts by weight to 100 parts by weight of the component (A) in the rubber composition for forming the hydrin-based rubber layer.

15. The heat-resistant hose according to any one of Claims 9 to 14, wherein the component (D) has a content ratio in the range of not less than 0.5 part by weight and less than 3 parts by weight to 100 parts by weight of the component (A) in the rubber composition for forming the hydrin-based rubber layer.

16. The heat-resistant hose according to any one of Claims 11 to 15, wherein the component (G) has a content ratio in the range of not less than 1 part by weight and less than 10 parts by weight to 100 parts by weight of the component (A) in the rubber composition for forming the hydrin-based rubber layer.

## Patentansprüche

1. Hydringummi-Zusammensetzung, die folgenden Bestandteile (A) bis (E) als wesentliche Bestandteile umfassend:
(A) einen 10 bis 40 Mol-% Ethylenoxid enthaltenden Hydringummi;
(B) ein Antioxidationsmittel auf Basis von Amin;
(C) ein Antioxidationsmittel auf Basis von Phenol;
(D) ein Nickelsalze ausschließendes Metall-Dithiocarbamat; und
(E) eine Hydrotalcit-Verbindung.

2. Hydringummi-Zusammensetzung nach Anspruch 1, wobei das Metall-Dithiocarbamat als Bestandteil (D) Zink-Dithiocarbamat ist.

3. Hydringummi-Zusammensetzung nach Anspruch 1 oder 2, ferner den folgenden Bestandteil (G) umfassend:
(G) ein Coagens mit einer Doppelbindung.

4. Hydringummi-Zusammensetzung nach Anspruch 3, wobei der Bestandteil (G) ein geringes Molekulargewicht von weniger als 4000 besitzt und wenigstens eine Doppelbindung aufweist.

5. Hydringummi-Zusammensetzung nach einem der Ansprüche 1 bis 4, wobei der Bestandteil (B) ein Anteilsverhältnis in einem Bereich von nicht weniger als 0,5 Gewichtsanteilen und weniger als 3 Gewichtsanteilen auf 100 Gewichtsanteile des Bestandteils (A) aufweist.

6. Hydringummi-Zusammensetzung nach einem der Ansprüche 1 bis 5, wobei der Bestandteil (C) ein Anteilsverhältnis in einem Bereich von nicht weniger als 0,5 Gewichtsanteilen und weniger als 3 Gewichtsanteilen auf 100 Gewichtsanteile des Bestandteils (A) aufweist.

7. Hydringummi-Zusammensetzung nach einem der Ansprüche 1 bis 6, wobei der Bestandteil (D) ein Anteilsverhältnis in einem Bereich von nicht weniger als 0,5 Gewichtsanteilen und weniger als 3 Gewichtsanteilen auf 100 Gewichtsanteile des Bestandteils (A) aufweist.

8. Hydringummi-Zusammensetzung nach einem der Ansprüche 3 bis 7, wobei der Bestandteil (G) ein Anteilsverhältnis in einem Bereich von nicht weniger als 1 Gewichtsanteil und weniger als 10 Gewichtsanteilen auf 100 Gewichtsanteile des Bestandteils (A) aufweist.

9. Wärmebeständiger Schlauch mit einer Schichtstruktur umfassend:
eine innere Schicht, die einen Acrylnitril-Butadiengummi, einen aus AcrylnitrilButadien und Polyvinylchlorid bestehenden gemischten Gummi, einen Fluorgummi oder ein Fluorharz einschließt; und
eine auf der äußeren Oberfläche der inneren Schicht angeordneten Gummischicht auf Basis von Hydrin,
wobei die Gummischicht auf Basis von Hydrin eine Gummizusammensetzung einschließt, die die folgenden Bestandteile (A) bis (F) als wesentliche Bestandteile umfasst:
(A) einen 10 bis 40 Mol-% Ethylenoxid enthaltenden Hydringummi;
(B) ein Antioxidationsmittel auf Basis von Amin;
(C) ein Antioxidationsmittel auf Basis von Phenol;
(D) ein Nickelsalze ausschließendes Metall-Dithiocarbamat; und
(E) eine Hydrotalcit-Verbindung; und
(F) ein 1,8-Diazabicyclo[5.4.0]undecen-7-Salz.

10. Wärmebeständiger Schlauch nach Anspruch 9, wobei das das Metall-Dithiocarbamat als Bestandteil (D) in der Gummizusammensetzung zum Bilden der Gummischicht auf Basis von Hydrin Zink-Dithiocarbamat ist.

11. Wärmebeständiger Schlauch nach Anspruch 9 oder 10, wobei die Gummischicht auf Basis von Hydrin zusätzlich zu den Bestandteilen (A) bis (F) eine Gummizusammensetzung einschließt, die den folgenden Bestandteil (G) umfasst:
(G) ein Coagens mit einer Doppelbindung.

12. Wärmebeständiger Schlauch nach Anspruch 11, wobei der Bestandteil (G) in der Gummizusammensetzung zum Bilden der Gummischicht auf Basis von Hydrin ein geringes Molekulargewicht von weniger als 4000 besitzt und wenigstens eine Doppelbindung aufweist.

13. Wärmebeständiger Schlauch nach einem der Ansprüche 9 bis 12, wobei der Bestandteil (B) ein Anteilsverhältnis in einem Bereich von nicht weniger als 0,5 Gewichtsanteilen und weniger als 3 Gewichtsanteilen auf 100 Gewichtsanteile des Bestandteils (A) in der Gummizusammensetzung zum Bilden der Gummischicht auf Basis von Hydrin aufweist.

14. Wärmebeständiger Schlauch nach einem der Ansprüche 9 bis 13, wobei der Bestandteil (C) ein Anteilsverhältnis in einem Bereich von nicht weniger als 0,5 Gewichtsanteilen und weniger als 3 Gewichtsanteilen auf 100 Gewichtsanteile des Bestandteils (A) in der Gummizusammensetzung zum Bilden der Gummischicht auf Basis von Hydrin aufweist.

15. Wärmebeständiger Schlauch nach einem der Ansprüche 9 bis 14, wobei der Bestandteil (D) ein Anteilsverhältnis in einem Bereich von nicht weniger als 0,5 Gewichtsanteilen und weniger als 3 Gewichtsanteilen auf 100 Gewichtsanteile des Bestandteils (A) in der Gummizusammensetzung zum Bilden der Gummischicht auf Basis von Hydrin aufweist.

16. Wärmebeständiger Schlauch nach einem der Ansprüche 11 bis 15, wobei der Bestandteil (G) ein Anteilsverhältnis in einem Bereich von nicht weniger als 1 Gewichtsanteil und weniger als 10 Gewichtsanteilen auf 100 Gewichtsanteile des Bestandteils (A) in der Gummizusammensetzung zum Bilden der Gummischicht auf Basis von Hydrin aufweist.

## Revendications

1. Composition de caoutchouc d'hydrine comprenant les composants (A) à (E) suivants en tant que composants essentiels :
(A) un caoutchouc d'hydrine contenant 10 à 40% en moles d'oxyde d'éthylène ;
(B) un antioxydant à base d'amine ;
(C) un antioxydant à base de phénol ;
(D) un dithiocarbamate métallique à l'exclusion des sels de nickel ; et
(E) un composé d'hydrotalcite.

2. Composition de caoutchouc d'hydrine selon la revendication 1, dans laquelle le dithiocarbamate métallique, comme composant (D), est du dithiocarbamate de zinc.

3. Composition de caoutchouc d'hydrine selon les revendications 1 ou 2, comprenant en outre le composant (G) suivant :
(G) un co-agent ayant une double liaison.

4. Composition de caoutchouc d'hydrine selon la revendication 3, dans laquelle le composant (G) a une faible masse moléculaire inférieure à 4000 et a au moins une double liaison.

5. Composition de caoutchouc d'hydrine selon l'une quelconque des revendications 1 à 4, dans laquelle le composant (B) a une teneur dont le rapport est compris entre au moins 0,5 partie en poids et moins de 3 parties en poids sur 100 parties en poids du composant (A).

6. Composition de caoutchouc d'hydrine selon l'une quelconque des revendications 1 à 5, dans laquelle le composant (C) a une teneur dont le rapport est compris entre au moins 0,5 partie en poids et moins de 3 parties en poids sur 100 parties en poids du composant (A).

7. Composition de caoutchouc d'hydrine selon l'une quelconque des revendications 1 à 6, dans laquelle le composant (D) a une teneur dont le rapport est compris entre au moins 0,5 partie en poids et moins de 3 parties en poids sur 100 parties en poids du composant (A).

8. Composition de caoutchouc d'hydrine selon l'une quelconque des revendications 3 à 7, dans laquelle le composant (G) a une teneur dont le rapport est compris entre au moins 1 partie en poids et moins de 10 parties en poids sur 100 parties en poids du composant (A).

9. Tuyau résistant à la chaleur ayant une structure en couches, comprenant :
une couche interne comprenant un caoutchouc d'acrylonitrile-butadiène, un caoutchouc mélangé composé d'acrylonitrile-butadiène et de chlorure de polyvinyle, un caoutchouc de fluor, ou une résine de fluor et
une couche de caoutchouc à base d'hydrine disposée sur la surface extérieure de la couche interne,
dans lequel la couche de caoutchouc à base d'hydrine comprend une composition de caoutchouc comprenant les composants (A) à (F) suivants en tant que composants essentiels :
(A) un caoutchouc d'hydrine contenant 10 à 40% en moles d'oxyde d'éthylène ;
(B) un antioxydant à base d'amine ;
(C) un antioxydant à base de phénol ;
(D) un dithiocarbamate métallique à l'exclusion des sels de nickel ;
(E) un composé d'hydrotalcite ;
(F) un sel de 1,8-diazabicyclo[5,4,0]undécène.

10. Tuyau résistant à la chaleur selon la revendication 9, dans lequel le dithiocarbamate métallique, comme composant (D) dans la composition de caoutchouc pour former la couche de caoutchouc à base d'hydrine, est un dithiocarbamate de zinc.

11. Tuyau résistant à la chaleur selon les revendications 9 ou 10, dans lequel la couche de caoutchouc à base d'hydrine comprend, en plus des composants (A) à (F), une composition de caoutchouc comprenant le composant (G) suivant :
(G) un co-agent ayant une double liaison.

12. Tuyau résistant à la chaleur selon la revendication 11, dans lequel le composant (G), dans la composition de caoutchouc pour former la couche de caoutchouc à base d'hydrine, a une faible masse moléculaire inférieure à 4000 et a au moins une double liaison.

13. Tuyau résistant à la chaleur selon l'une quelconque des revendications 9 à 12, dans lequel le composant (B) a une teneur dont le rapport est compris entre au moins 0,5 partie en poids et moins de 3 parties en poids sur 100 parties en poids du composant (A) dans la composition de caoutchouc pour former la couche de caoutchouc à base d'hydrine.

14. Tuyau résistant à la chaleur selon l'une quelconque des revendications 9 à 13, dans lequel le composant (C) a une teneur dont le rapport est compris entre au moins 0,5 partie en poids et moins de 3 parties en poids sur 100 parties en poids du composant (A) dans la composition de caoutchouc pour former la couche de caoutchouc à base d'hydrine.

15. Tuyau résistant à la chaleur selon l'une quelconque des revendications 9 à 14, dans lequel le composant (D) a une teneur dont le rapport est compris entre au moins 0,5 partie en poids et moins de 3 parties en poids sur 100 parties en poids du composant (A) dans la composition de caoutchouc pour former la couche de caoutchouc à base d'hydrine.

16. Tuyau résistant à la chaleur selon l'une quelconque des revendications 11 à 15, dans lequel le composant (G) a une teneur dont le rapport est compris entre au moins 1 partie en poids et moins de 10 parties en poids sur 100 parties en poids du composant (A) dans la composition de caoutchouc pour former la couche de caoutchouc à base d'hydrine.
